# DEMANDE DE BREVET EUROPEEN

(11) **EP 0 557 168 A1**
(43) Date de publication de la demande: **25.08.1993**
(21) Numéro de dépôt: 93400361.7
(22) Date de dépôt: 12.02.1993
(51) Int. Cl.: H04Q 3/00, H04L 12/24, H04Q 7/02, H04B 7/26, H04L 12/56

(54) **Système de gestion dynamique d'un ensemble d'équipements reliés en réseau de télécommunications**

(30) Priorité: 19.02.1992 FR 9201879
(71) Demandeur: ALCATEL TELSPACE, F-92734 Nanterre Cédex (FR)
(72) Inventeur: Montarges, Jean, F-78330 Fontenay le Fleury (FR); Destouesse, Claude, F-95100 Argenteuil (FR)
(74) Mandataire: El Manouni, Josiane

(57) **Abrégé**

Ce système de gestion comporte un réseau de télécommunications, dit réseau support de gestion, dont les noeuds sont constitués par des équipements dits d'accès et de commutation d'informations de gestion (EG), associés respectivement aux équipements gérés (ET), et assemblés pour former un réseau maillé topologiquement indépendant du réseau de télécommunications reliant les équipements gérés, et utilisant une diffusion par inondation.

## Description

La présente invention se rapporte à une architecture de système de gestion dynamique d'un ensemble d'équipements reliés en réseau de télécommunications et travaillant ensemble selon des configurations variables adaptées aux besoins des utilisateurs de ce réseau. L'invention s'applique notamment à un réseau tactique de télécommunications utilisant des faisceaux hertziens.

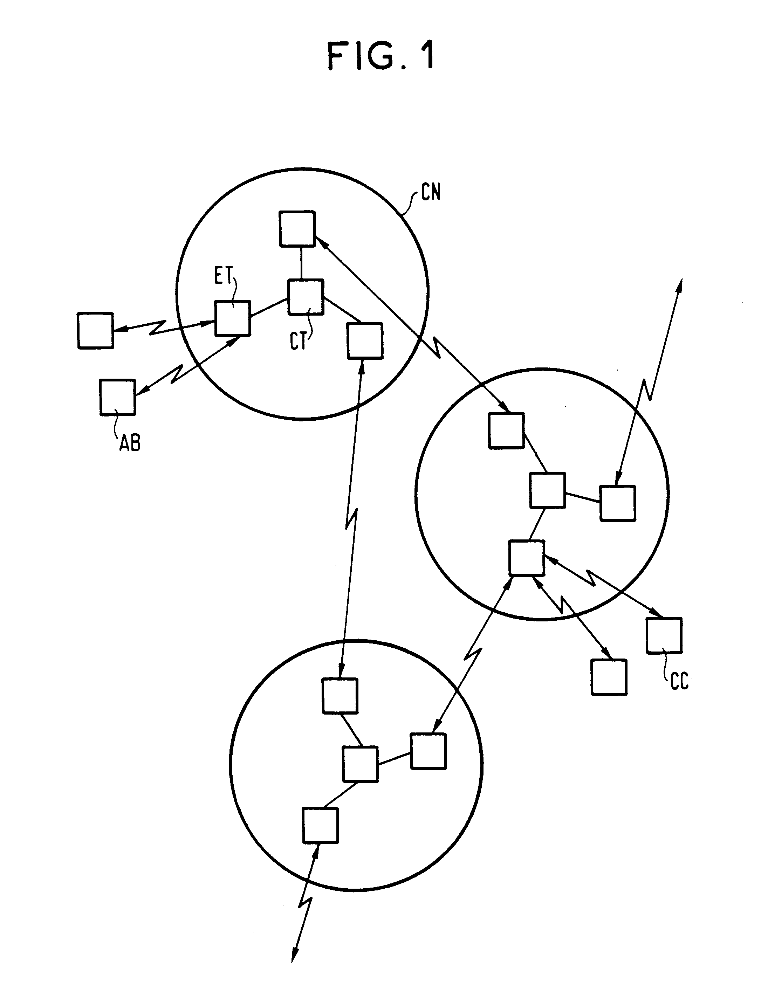

Un tel réseau tactique, illustré sur la figure 1, comporte un ensemble de centres nodaux CN situés aux noeuds de ce réseau, et comportant eux-mêmes chacun un organe de commutation, ou commutateur, CT, raccordé à une pluralité d'équipements, ET, constitués en l'occurrence par des équipements de faisceaux hertziens et raccordés à leur tour soit à des utilisateurs, AB, de ce réseau, soit à d'autres équipements ET appartenant à d'autres centres nodaux de ce réseau, pour constituer un réseau maillé.

Une telle transmission par faisceaux hertziens est avantageusement utilisée dans un réseau tactique car elle permet de reconfigurer ce réseau au gré des agressions extérieures auxquelles il est soumis, par simple déplacement d'un ou plusieurs de ses centres nodaux au fur et à mesure de ces agressions.

L'adaptation d'un réseau tactique de télécommunications aux besoins des utilisateurs qui, pour les applications militaires, comportent la résistance aux agressions extérieures, requiert que des informations de gestion soient échangées entre les divers constituants du réseau, et en particulier entre une entité appelée centre de commandement (CC), ou plus généralement centre de gestion, du réseau, et les équipements qui constituent ce réseau, et dont le centre de commandement de réseau doit contrôler le fonctionnement et la manoeuvre.

Ces informations de gestion sont généralement échangés dans les deux sens, à savoir des équipements gérés vers le centre de commandement, et du centre de commandement vers les équipements gérés, étant généralement dites de télésurveillance, ou d'alarme, dans le premier cas, et de télécommande dans le deuxième cas, et s'appliquant dans tous les cas à des paramètres de fonctionnement des équipements gérés tels que fréquence, puissance, débit...etc.

Il est connu de transmettre de telles informations de gestion en utilisant un réseau de télécommunications dit support de gestion par opposition à celui, dit de trafic dont il a été question jusqu'à présent, et sur lequel sont transmises les informations dites de trafic. Ce réseau support de gestion peut être confondu avec le réseau de trafic, auquel cas la gestion se comporte comme un groupe d'utilisateurs particuliers de ce réseau. Il est également connu, pour des réseaux de trafic d'infrastructure fixe, d'utiliser un réseau support de gestion distinct du réseau de trafic, pour éviter des situations de blocage en cas de défaillance de ce réseau de trafic. Par ailleurs, il est également connu d'acheminer des informations de gestion sur des voies de servitude établies en paralléle des voies de trafic. A titre d'exemple, dans le cas d'un réseau utilisant des faisceaux hertziens, cette mise en parallèle peut être assurée par un multiplexage dans la trame hertzienne.

Dans ces différents cas, l'acheminement des informations de gestion est ainsi le plus souvent de type point à point entre les équipements gérés et le centre de gestion.

Ces procédés ont pour principal inconvénient de ne pas garantir une sûreté de transmission suffisante pour les informations de gestion, notamment en cas d'agression extérieure contre le réseau de trafic, ou pendant les manoeuvres de reconfiguration de ce réseau.

La présente invention a pour objet une architecture de système de gestion permettant notamment d'éviter cet inconvénient.

La présente invention a pour objet un système de gestion dynamique d'un ensemble d'équipements, dits de transmission d'information de trafic, reliés en un réseau de télécommunications, dit réseau de trafic, et travaillant ensemble selon des configurations variables adaptées aux besoins des utilisateurs de ce réseau, ledit système de gestion étant essentiellement caractérisé en ce qu'il comporte un réseau de télécommunications, dit réseau support de gestion, dont les noeuds sont constitués par des équipements dits d'accès et de commutation d'informations de gestion, associés respectivement auxdits équipements de transmission d'informations de trafic, et assemblés pour former un réseau maillé topologiquement indépendant du réseau de trafic et utilisant une diffusion par inondation.

D'autres objets et caractéristiques de la présente invention apparaîtront à la lecture de la description suivante d'un exemple de réalisation, faite à titre d'exemple dans le cas de l'application à un réseau tactique de télécommunications utilisant des faisceaux hertziens, et en relation avec les dessins ci-annexés dans lesquels, outre la figure 1 déjà décrite et relative à l'art antérieur,
- la figure 2 est un schéma d'un centre nodal dans un réseau tactique de télécommunications fripé d'un système de gestion suivant l'invention,
- la figure 3 est un schéma d'un équipement dit d'accès et de commutation d'informations de gestion dans un système de gestion suivant l'invention.

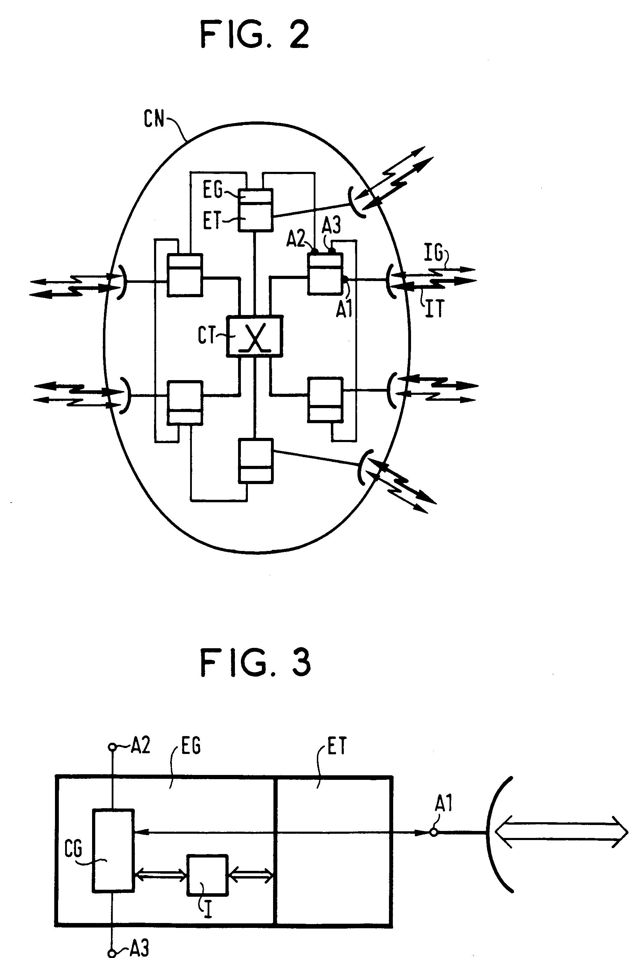

Le centre nodal CN représenté schématiquement sur la figure 2 comporte un commutateur, dit de trafic, CT, raccordé a une pluralité d'équipements dits de transmission d'informations de trafic ET, pris à titre d'exemple en nombre égal à six, et constituant les équipements à gérer.

Chaque équipement de transmission d'informations de trafic ET est associé à un équipement dit d'accès et de commutation d'informations de gestion, noté EG. Ces équipements d'accès et de commutation d'informations de gestion EG constituent les noeuds d'un réseau de télécommunications, dit support de gestion par opposition à celui, dit de trafic, sur lequel sont acheminées les informations de trafic échangées entre utilisateurs du réseau.

Chaque équipement d'accès et de commutation d'informations de gestion EG est en l'occurrence muni de trois accès à ce réseau support de gestion, dits accès réseau, par l'intermédiaire desquels il est relié à trois autres équipements d'accès et de commutation d'informations de gestion EG de ce réseau support de gestion, et d'un accès (non référencé spécifiquement sur la figure 2) par l'intermédiaire duquel il est relié à l'équipement géré, cet accès étant dit accès équipement.

La liaison de l'équipement EG considéré à un équipement EG d'un autre centre nodal (non représenté) de ce réseau, par l'un des accès réseau, note A1, se fait en l'occurrence, à travers l'équipement de transmission ET associé, et en l'occurrence par une liaison hertzienne.

Les deux autres accès réseau, notés A2, A3, sont reliés, en l'occurrence par des liaisons filaires, à deux autres équipements EG de ce même centre nodal, qui sont en l'occurrence les deux équipements EG les plus proches de cet équipement.

On notera que le nombre d'accès réseau pourrait être choisi supérieur à trois sans sortir du cadre de la présente invention.

On notera de même que le nombre d'équipements gérés ET associes à un même équipement de gestion EG pourrait être choisi supérieur à 1 sans sortir du cadre de la présente invention, auquel cas l'équipement EG serait muni d'un nombre correspondant d'accès équipements.

L'accès A1 étant en l'occurrence connecté à travers l'équipement ET associe, les informations de trafic, notées IT, et de gestion, notées IG, sont en l'occurrence transmises sur des voies différentes d'une même liaison hertzienne, comme illustré de façon schématique sur la figure 2.

Sans sortir du cadre de l'invention, cet accès A1 pourrait être connecté sur une liaison filaire comme les accès A2 et A3.

L'ensemble forme par les différents équipements EG ainsi reliés forme ainsi un réseau maillé, dit réseau support de gestion, assurant la transmission d'informations de gestion entre le centre de commandement du réseau d'une part, et les équipements d'accès et de commutation d'informations de gestion ainsi associés respectivement aux différents équipements de transmission d'informations de trafic, d'autre part.

On notera que le centre de commandement peut être considéré comme un équipement d'accès et de commutation d'informations de gestion particulier, et peut ainsi être déplacé au sein du réseau support de gestion et au gré des reconfigurations de ce réseau.

L'équipement EG représenté sur la figure 3 comporte un commutateur, dit commutateur de gestion, CG, ayant pour accès réseau les accès A1, A2, A3 et destiné à assurer l'acheminement, sur ce réseau de gestion, des informations de gestion émises ou reçues par cet équipaient EG.

L'accès de ce commutateur de gestion à l'équipement géré (ET) se fait à travers une interface I destinée à mettre les informations de gestion reçues sur les accès réseau A1, A2 et A3 et destinées à l'équipement ET sous une forme adaptée à leur réception par cet équipement, ou inversaient les informations de gestion émises par cet équipement ET sous une forme adaptée à leur transmission sur les accès A1, A2 et A3 du commutateur de gestion.

L'acheminement des informations de gestion sur ce réseau support de gestion est réalisé suivant le mode connu de diffusion dit "par inondation", suivant lequel un équipement EG qui reçoit de telles informations sur l'un de ces trois accès réseau les réemet une fois sur les deux autres accès réseau, ce qui permet de garantir une redondance d'acheminement pour ces informations. Si un équipement EG est lui même à l'origine des informations ainsi émises il les transmet directement sur les trois accès réseau.

Le commutateur de gestion CG sera par exemple constitué, dans le cas d'une transmission des informations de gestion suivant le mode de transmission connu dit par paquets, par un commutateur de paquets, l'interface I étant alors constituée par un empaqueteur-désempaqueteur. Ce commutateur de gestion, de faible capacité compte tenu de son nombre limité d'accès, et cette interface, seront avantageusement réalisés sur un seul et même support, composant ou carte de composants (suivant le degré d'intégration).

Par exemple, dans le cas de réalisation sur une carte, cette dernière intègre d'une part des moyens réalisant une fonction d'interface avec l'équipement géré et avec le réseau de gestion, et d'autre part une fonction de commutation de messages de gestion, en l'occurrence une fonction de commutation de paquets, selon la technique du routage par inondation.

Au niveau de l'interface avec l'équipement géré, cette carte réalise la mise au format des messages de télésurveillance et de télécommande, à l'entrée et à la sortie de l'équipement géré.

Au niveau de l'interface avec le réseau de gestion, cette carte assure:
- l'envoi des messages de télésurveillance provenant de l'équipement,
- la reconnaissance des messages destinés à l'équipement géré et leur traitement pour être dirigés sur cet équipement,
- la gestion des acquittements des messages correspondant à l'équipement géré.

Par ailleurs, cette carte peut être soit intégrée à l'équipement à gérer, soit disposée dans un coffret extérieur.

## Revendications

**1/** Système de gestion dynamique d'un ensemble d'équipements (ET),dits de transmission d'information de trafic, reliés en un réseau de télécommunications, dit réseau de trafic, et travaillant ensemble selon des configurations variables adaptées aux besoins des utilisateurs de ce réseau, caractérisé en ce qu'il comporte un réseau de télécommunications, dit réseau support de gestion, dont les noeuds sont constitués par des équipements dits d'accès et de commutation d'informations de gestion (EG), associés respectivement auxdits équipements de transmission d'informations de trafic (ET), et assemblés pour former un réseau maillé topologiquement indépendant du réseau de trafic et utilisant une diffusion par inondation.

**2/** Système selon la revendication 1, caractérisé par le fait qu'un équipement d'accès et de commutation d'informations de gestion (EG) comporte un commutateur de messages à au moins trois accès, dits accès réseau, par lesquels s'effectue leur diffusion sur l'ensemble du réseau support de gestion, et au moins un accès, dit accès équipement, assurant les entrées/sorties vers le ou les équipements gérés (ET).

**3/** Système selon la revendication 2, caractérisé en ce que lesdites informations de gestion étant transmises entre lesdits équipements de transmission d'information de trafic et un centre de gestion, ledit centre de gestion est considéré comme un équipement particulier d'accès et de commutation d'informations de gestion pouvant se situer en n'importe quel point du réseau support de gestion.

**4/** Système selon les revendications 1, 2 et 3 caractérisé en ce que ledit réseau de trafic constitue un réseau mobile et tactique de télécommunications.

**5/** Système selon la revendication 2, caractérisé en ce que ledit commutateur de messages est un commutateur de paquets.

**6/** Système selon l'une des revendications 1 à 5, caractérisé en ce que les informations de gestion transmises entre les équipements d'accès et de commutation d'informations de gestion sont transmises sur un canal de transmission différent de celui sur lequel sont transmises les informations de trafic de l'ensemble des équipements gérés associés à ces équipements d'accès et de commutation d'informations de gestion.
